# EUROPEAN PATENT SPECIFICATION

(11) **EP 0 447 530 B1**
(45) Date of publication and mention of the grant of the patent: **12.07.1995**
(21) Application number: 90914989.0
(22) Date of filing: 09.10.1990
(51) Int. Cl.: A62D 3/00, B09B 3/00, C02F 11/00, C04B 18/00

(54) **TREATMENT OF HAZARDOUS WASTE MATERIAL**
BEHANDLUNG VON GEFÄHRLICHEN ABFALLSTOFFEN
TRAITEMENT DE DECHETS DANGEREUX

(30) Priority: 10.10.1989 US 419087
(43) Date of publication of application: 25.09.1991
(73) Proprietor: WASTECH, INC., Oak Ridge, TN 37830 (US)
(72) Inventor: PEACOCK, E., Benjamin, Oak Ridge, TN 37830 (US)
(74) Representative: Chettle, Adrian John
(86) International application number: US9005765
(87) International publication number: WO9105586

(56) References cited:
- EP-A- 0 258 088
- US-A- 3 486 916
- US-A- 4 416 810
- Soviet Inventions Illustrated,Section Ch:Chemical , Week 8745,23 December 1987,Derwent Publications Ltd.,(London,GB) & SU,A, 1293142

## Description

### Technical Field

This invention relates to a process for the treatment of hazardous waste material. More specifically, this invention relates to a process for the stabilization of hazardous waste material (i.e., soils, sludges, liquids) comprising various hydrocarbons (such as aromatic, aliphatic, and chlorinated hydrocarbons) in a pozzolanic/cementitious matrix.

### Background of the Invention

Safe, proper disposal of hazardous waste, as well as the remediation of sites already contaminated by the undesirable disposal of such waste and/or spills from operating incidents, presents a problem both for the generator of the waste as well as the regulatory agencies in charge of ensuring the public health and the quality of the environment. The volume of hazardous and toxic substances generated each year presents industry with an enormous challenge for the disposal practices of the past, which practices now are found to be environmentally unacceptable. The proper disposal of such waste is usually made difficult by the fact that often different types of wastes are mixed together in varying concentrations in the soil and water in one site.

For the purposes of this invention, the term "hazardous waste material" will be understood to refer to materials designated as hazardous by the U.S. government (for example, see 40 C.F.R.) and to materials which contain a substance designated by the U.S. government as a suspected carcinogen (see also 40 C.F.R.).

A method of dealing with hazardous wastes in the past has been to simply dump such wastes onto the ground or into a holding pond. However, this method may pose serious environmental problems. One such problem is that the hazardous waste seeps through the ground and into the ground water, thus polluting the water supply. Another problem is that many of these wastes are not extremely hazardous or toxic by themselves but, when placed in the ground, act as a medium or carrier to allow other more hazardous materials to pass through them and into the ground water supply.

Much waste has been disposed of by storage in steel drums and storing the drums in ordinary land fills. However, the drums tend to deteriorate, allowing the hazardous waste to escape into the land fill, and eventually into the water supply.

In the art of treating hazardous radioactive heavy metals , encasing the metals in concrete is an effective treatment process. However, that process has proven to be difficult to apply to the treatment of liquid organic waste because the organic waste, when added to a concrete mix, tends to prevent the concrete from hardening. The organic materials tend to coat the cement molecules, which prevents the water additives from contacting and reacting with the cement molecules to initiate crystallization.

Another treatment process involves adding sufficient amounts of cement to a waste material to solidify the mass. However, this process has several disadvantages. First, the final end wasteform has increased in volume by several orders of magnitude, which is an undesirable waste treatment character. Second, the pollutants are freely suspended in the matrix and, with the advection of percolating water, may breach the physical containment. Third, such breaching of the physical containment may allow the pollutants to deteriorate the cementitious matrix.

U.S. Patent 4,416,810 teaches the concept of using a dispersing agent to allow a waste comprising an aromatic liquid and an organic fluor to be mixed with cement. However, this patent fails to teach how one might treat hazardous waste to create a stable and non-hazardous mixture which may be readily transported to a remote site for further use or disposal.

EP-A-0 258 088 teaches a process for treating hazardous wastes, comprising the steps of mixing a retarder (e.g., glycerine) with an accelerator (e.g., calcium chloride) to form a chemical reagent, and then blending the chemical reagent with the wastes and a pozzolanic material.

However, a need still exists for a process by which hazardous waste material can be treated to render such waste material stable, non-hazardous and in a form suitable for disposal or further use.

### Summary of the Invention

Briefly described, the present invention comprises a process for the stabilization of hazardous waste material in concrete or other substantially rigid structures by treatment with an alcohol, a surfactant and a binder. More specifically, the invention comprises the treatment of hazardous wastes (such as aliphatic hydrocarbons, chlorinated hydrocarbons, aromatic hydrocarbons, combinations of such materials, etc.) to render such wastes stable and non-hazardous.

The resulting cementitious mixture can then be pumped back to the site from which the hazardous material was removed or can be transported away, such as by a truck for use at a remote site, storage at a remote disposal site or for constructing concrete objects.

If necessary, water must be added to form the cementitious matrix. The addition of water may not be necessary if the waste material contains sufficient water to form such matrix.

The process of this invention allows the hazardous waste material to be treated on site and replaced in the ground if desired, in a stable and safe form. No hazardous material need be transported, as once the waste has been mixed with the various components as more fully described below, a stable non-hazardous mixture results.

The waste materials, and their concentrations, which are effectively treated by this invention may range across a wide spectrum. These materials can be treated by this invention in different physical states, such as aqueous solutions, raw liquid materials, sludges, soils, etc.

Accordingly, an object of this invention is to provide a process for the treatment of hazardous waste material.

Another object of this invention is to provide a process for the treatment of hazardous waste material which may contain aromatic hydrocarbons, aliphatic hydrocarbons and chlorinated hydrocarbons.

Another object of this invention is to provide a process for the treatment of hazardous waste material which may be in the form of soils, sludges and liquids.

A further object of this invention is to provide a process for the treatment of hazardous waste material so that the treated material is stable, non-hazardous and in a form suitable for disposal or further use.

A further object of this invention is to provide a process by which hazardous waste material is rendered stable and non-hazardous by treatment with an alcohol component, a surfactant component and a binder component.

A still further object of this invention is to provide a process by which hazardous waste material is stabilized in a substantially rigid non-hazardous pozzolanic/cementitious matrix.

These and other objects, features and advantages of this invention will become apparent from the following detailed description.

### Detailed Description of the Preferred Embodiment

The process of this invention comprises the following steps. First, the waste material to be treated is mixed (such as by mechanical stirring, churning, tumbling, etc.) to obtain a more evenly dispersed form of the waste material. Next, the waste material is mixed with a first composition which comprises at least one monohydric alkyl alcohol, and at least one surfactant and water (if necessary). The resulting (or second) composition is then mixed with a binder component to form a third composition which is allowed to harden into a substantially rigid end product. This end product is in a stable form which can be transported to a remote site for further treatment, disposal or other use.

Although not fully understood, the alcohol component is believed to bond with a substantial portion of the constituents of the waste material. Therefore, this component is selected in view of the chemical constituents and structure of such waste material. The quantity of the alcohol component is not restricted to a specific range of amounts but, in general, must be sufficient to achieve such bonding with the constitutents of the waste material.

The surfactant component, which may be a mixture of surfactants, is selected and used in an amount sufficient to achieve a substantial reduction in the surface tension of the waste material/alcohol component composition. The second composition will be dispersed in water due to the hydrophilic nature of the surfactant component.

In order to stabilize the hazardous waste material and form a substantially rigid structure, the second composition is mixed with a binder component which will form a solid when cured.

The alcohols useful in this invention are monohydric alkyl alcohols having from 8-32 carbon atoms with the preferred alcohols having from 8-18 carbon atoms. Specific examples of useful alcohols include n-octanol, n-nonanol, n-decanol and n-hexadecanol. Although monohydric straight chain alkyl alcohols are preferred, monohydric alkyl alcohols having branched chains are also useful in this invention.

The alcohol component may be comprised of a mixture of two or more monohydric alkyl alcohols wherein each alcohol has from 8-32 carbon atoms, preferably 8-18 carbon atoms.

The surfactant component may be comprised of one or more surfactants each having from 1-100 polyoxyethylene units. The useful surfactants may be non-ionic, cationic or anionic.

Specific examples of useful surfactants include:
A. Surfactants sold under the trademark Tergitol by Union Carbide Corporation, including:
   nonylphenol polyethylene glycol ether
   alkyloxy polyethyleneoxy ethanol
   alkyloxy (polyethyleneoxy propyleneoxy)
   isopropanol
B. Non-ionic and anionic surfactants sold under the trademarks Igepal and Igepon by GAF Corporation, including:
   nonylphenoxy poly(ethyleneoxy) ethanol
C. Polyoxyethylene glycol ethers
D. Non-ionic, cationic and anionic surfactants sold under the trademark Triton by Rohm & Haas Corporation, including:
   octylphenoxy polyethoxy ethanol
   nonylphenoxy polyethoxy ethanol
E. Surfactants sold under the trademark Silwet by Union Carbide Corporation.

In a preferred embodiment of this invention, the alcohol and surfactant components are used in an amount of from about 1 to about 20 percent, by weight, based on the weight of the organic waste present in the waste material to be treated. Preferably, this range is from about 3 to 10 percent, by weight.

If necessary, additional amounts of the alcohol and/or surfactant components may be added to the first composition to obtain the desired results.

The cementitious binder component is comprised of one or more standard materials, such as several different ASTM classes of flyash, silica fume, types I-V Portland cement, and blast furnace slag. Other types of pozzolans and cements can be used to produce similar solidifying results.

The physical parameters of the waste material are measured following standard protocols, and the chemical parameters are measured by conventional analytical procedures. For organohydrocarbon pollutants, gas chromatography is used and, for the heavy metals, atomic absorption procedures are used.

The physical procedures used are inclusive of, but not limited to:
1. Moisture Content (ASTM D2216-80)
2. Particle Sizing (ASTM D-422-63)
3. pH Analysis (SW-846, Method 9045)
4. Bulk Density (SW-846)
5. Total Recoverable Oil & Grease (SW-846, Method 9070, 9071, or APHA 503D)
The chemical constituents are analyzed by conventional analytical procedures, and their concentrations are determined during these procedures.

These physical and chemical parameters provide the information needed to determine the amounts of the various components which are necessary for the process of the invention to meet the performance criteria of the final product.

The preferred mixing method is to place the waste material into a mixing chamber and then add, with continued mixing, water (if necessary) and the alcohol and surfactant components to form a slurry. The mixer design will be dictated by the physical properties of the waste. The guidelines set for this in ASTM C305-82 may be followed.

After the waste material has reached a homogeneous slurry, the binder component is added, and the entire composition is mixed for an additional 10-60 seconds or until the composition has a smooth, homogeneous texture.

Once the mixture has obtained a smooth, homogeneous texture, mixing is stopped and the product is poured or pumped into receptacles. Preferably, at this point the product has a slump of 5-7 using standard concrete measurements. A drier or wetter mix still produces desired results.

The mixture is allowed to autogenically hydrate for a minimum of 28 days before testing.

Depending upon the physical characteristics of the waste material (such as clays used in refinery operations) aggregate materials may be added (e.g., silica sand or other materials with similar properties) to produce a solidified product.

Several physical and chemical testing protocols are in place to determine the effectiveness of a treatment process.

The physical tests are:
1. Unconfined Compressive Strength (ASTM C109-86 or ASTM C-39-86)
2. Structural Integrity (SW-846, Method 1310)
3. Hydraulic Conductivity (Permeability) (USACE-EM-1110-2-1906)
4. Wet/Dry Cycles (SW-846)
6. Final Density (SW-846)
7. Gamma Irradiation (10CFR61)
8. Biodegradation Test (ASTM G21 & G22)
9. Immersion/Compressive Strength (10CFR61)
10. Homogeneity (10CFR61)
11. Corrositivity (40CFR261.22)
12. Chemical Stability (10CFR61, 40CFR261.21, 40CFR261.23)
13. Free Liquids (10CFR61.56)
The chemical leaching tests are:
1. Extraction Procedure (EP) Toxicity Test (SW846, Method 1310, 10CFR261)
2. Toxicity Characteristic Leaching Procedure (TCLP) (Federal Register)
3. California Waste Extraction Test (WET) (State of California, Title 22)
4. Dynamic Leaching Test (ANS 16.1)
5. Static Leaching Test (MCC-1)
While there are other suitable tests available, these are the preferred tests. The federal agencies are changing methodologies routinely to measure effectiveness. The specific test procedure used is dictated as to what will be the disposition of the final wasteform.

This invention is further illustrated by the following examples which are illustrative of certain embodiments designed to teach those of ordinary skill in the art how to practice this invention and to represent the best mode contemplated for carrying out this invention.

The examples which appear below in this application are illustrations of actual treatment of waste materials by the process of this invention. The testing procedures are performed after 28 days of hydration.

In these examples permeability is given in units of Darcys. One Darcy is equivalent to the passage of 1 cubic centimetre of fluid of 1 m·Pa·s (1 centipoise) viscosity flowing in 1 second under a pressure of 1.01325 x 10⁵ Pa (1 atmosphere) through a porous medium having a cross sectional area of 1 centimetre and a length of 1 centimetre.

### EXAMPLE 1

Major chemical manufacturers use a series of treatment lagoons to treat generated waste by-products through aerobic and/or anaerobic digestion. Over a span of several years of operation, the concentration of pollutants that are unaffected by this process may increase to the level that the U.S. Environmental Protection Agency deems them to be hazardous. These materials are identified in 40 C.F.R. 261, together with the maximum concentration allowable for each constituent. Table 1-1 identifies the pollutants and their concentrations as determined by analytical characterization and using conventional atomic absorption and gas chromatography.

**TABLE 1-1**

| **Description** | **Concentration (Mg/Kg)** | | **Regulatory Limit (ppm)** |
|---|---|---|---|
| | **Lagoon #1** | **Lagoon #2** | |
| 1,2-Dichlorobenzene | 57.0 | 2.6 | 4.3 |
| 1,3-Dichlorobenzene | ND | 0.26 | 4.3 |
| Phenol | 7.8 | 2.7 | 14.4 |
| Pyridine | 0.48 | ND | 5.0 |
| Acetone | 5.7 | 0.447 | 1.0 |
| Benzene* | 10,000.11 | 10,00.044 | 0.07 |
| 2-Butanone | 0.12 | 0.019 | 7.2 |
| Carbon Disulfide | 0.045 | 0.0078 | 14.4 |
| Chlorobenzene | 0.13 | 0.146 | 1.4 |
| 1,1-Dichloroethene | 0.039 | ND | 0.1 |
| Ethyl benzene | 1.8 | 0.031 | 4.0 |
| Methylene Chloride | 0.196 | 0.070 | 8.6 |
| 4-Methyl-2-pentanone | 1.2 | ND | 2.0 |
| Toluene | 12.0 | 0.131 | 14.4 |
| Total Xylene | 8.1 | 0.221 | 10.0 |
| Arsenic | 24.0 | 2.3 | 5.0 |
| Barium | 3230.0 | 1410.0 | 100.0 |
| Cadmium | 2.3 | 5.3 | 1.0 |
| Chromium | 131.0 | 118.0 | 5.0 |
| Lead | 1300.0 | 311.0 | 5.0 |
| Manganese | 15,000.0 | 3,360.0 | 100.0 |
| Mercury | 0.28 | 0.28 | 0.2 |
| Silver | 8.0 | ND | 1.0 |

| | | | |
|---|---|---|---|
| * The samples were spiked with 10,000 ppm benzene. | | | |
| ND Not detected in the analysis | | | |

The physical characteristics for these waste materials are shown in Table 1-2. This sludge material is 40-50 percent by weight solids.

**TABLE 1-2**

| **Parameter** | **Lagoon #1** | **Lagoon #2** |
|---|---|---|
| Density | 1.13 | 1.11 |
| Moisture | 52.0% | 48.0% |
| pH | 7.9 | 8.1 |
| Oil & Grease | <1.0% | <1.0% |

The materials were mixed in a Hobart mixer at moderate speed. The concentration of each additive is provided in Table 1-3. The final products showed excellent receptiveness to the treatment. The results of physical tests are shown in Table 1-4. The results of the applicable chemical testing protocols are illustrated in Table 1-5 and 1-6 for Lagoons #1 and #2 respectively. Table 1-5 illustrates the effectiveness after performing consecutive TCLP extractions similar to the Multiple Extraction Procedure.

**TABLE 1-3**

| **Additives (Gms)** | **Lagoon #1** | **Lagoon #2** |
|---|---|---|
| Waste sludge | 1000.0 | 1000.0 |
| 1:1 Mixture Octanol-Decanol | 37.5 | 28.0 |
| Polyoxyethylene glycol ether | 37.5 | 28.0 |
| Water | 50.0 | 58.0 |
| Class "F" Flyash | 400.0 | 390.0 |
| Type II Portland Cement | 267.0 | 260.0 |

**TABLE 1-4**

| **Parameter** | **Lagoon #1** | **Lagoon #2** |
|---|---|---|
| Unconfined compressive Strength | 42.8 x 10⁶N/M² (6208.0 psi) | 25.6 x 10⁶N/M² (3708.0 psi) |
| Permeability | 1.18E-8 Darcys | 2.14E-8 Darcys |
| Biodegradation | 0.0 | 0.0 |
| Free Liquids | 0.0% | 0.0% |

**TABLE 1-5**

| **Description** | **Sludge mg/kg** | **Lagoon #1 TCLP Extraction (mg/1)** | | |
|---|---|---|---|---|
| | | **1** | **2** | **3** |
| 1,2-Dichlorobenzene | 57.0 | <0.01 | <0.01 | <0.01 |
| Phenol | 7.8 | <0.34 | <0.19 | <0.09 |
| Pyridine (1) | 0.48 | <0.5 | <5.0 | <0.5 |
| Acetone | 5.7 | <0.5 | <0.5 | <0.5 |
| Benzene | 10,000.11 | 7.6* | 5.2* | 4.2* |
| 2-Butanone (1) | 0.12 | <0.5 | <0.5 | <0.5 |
| Carbon disulfide (1) | 0.045 | <10.0 | <10.0 | <10.0 |
| Chlorobenzene (1) | 0.13 | <0.5 | <0.5 | <0.5 |
| 1,1-Dichloroethene (1) | 0.039 | <0.5 | <0.5 | <0.5 |
| Ethyl benzene | 1.8 | <0.5 | <0.5 | <0.5 |
| 4-Methyl-2-pentanone | 1.2 | 4.5** | 1.2** | 0.5** |
| Methylene Chloride (1) | 0.196 | <0.5 | <0.5 | <0.5 |
| Toluene | 12.0 | <0.5 | <0.5 | <0.5 |
| Total Xylene | 8.1 | <0.5 | <0.5 | <0.5 |
| Arsenic | 24.0 | <0.1 | <0.1 | <0.1 |
| Barium | 3230.0 | 2.0*** | 1.0*** | 0.62*** |
| Cadmium | 2.3 | <0.01 | <0.01 | <0.01 |
| Chromium | 131.0 | <0.05 | <0.05 | <0.05 |
| Lead | 1300.0 | <0.2 | <0.2 | <0.2 |
| Manganese | 15,500.0 | <0.05 | <0.05 | 3.4 |
| Mercury | 0.28 | <0.0002 | <0.0002 | <0.0002 |
| Silver | 8.0 | <0.01 | <0.01 | <0.01 |

| | | | | |
|---|---|---|---|---|
| NOTES: *Additives would have to be increased to adequately handle the large concentration of benzene. | | | | |
| **Follow-up investigation proved this result was due to laboratory contamination. | | | | |
| ***Barium is a naturally occurring element in Portland cement. | | | | |
| (1)Minimum detection limit due to the dilution factor. | | | | |

**TABLE 1-6**

| **Description** | **Sludge mg/kg** | **Lagoon #2 TCLP Extraction (mg/1)** |
|---|---|---|
| 1,2-Dichlorobenzene | 2.6 | <0.01 |
| 1,3-Dichlorobenzene | 0.26 | <0.01 |
| Phenol | 2.7 | 0.11 |
| Acetone (1) | 0.447 | <0.5 |
| Benzene | 10,000.044 | 12.0* |
| 2-Butanone (1) | 0.019 | <0.5 |
| Carbon disulfide | 0.0078 | <0.001 |
| Chlorobenzene (1) | 0.146 | <0.5 |
| Chlorobenzene | 0.146 | <0.05 |
| Ethyl benzene (1) | 0.031 | <0.05 |
| Methylene Chloride | 0.070 | <0.05 |
| Toluene | 0.131 | <0.05 |
| Total Xylene | 0.221 | <0.05 |
| Arsenic | 2.3 | <0.01 |
| Barium | 1410.0 | 1.9*** |
| Cadmium | 5.3 | <0.01 |
| Chromium | 118.0 | 0.06 |
| Lead | 311.0 | <0.2 |
| Manganese | 3360.0 | <0.05 |
| Mercury | 0.28 | <0.0002 |

| | | |
|---|---|---|
| NOTES: *Additives would have to be increased to adequately handle the large concentration of benzene. | | |
| **Follow-up investigation proved this result was due to laboratory contamination. | | |
| ***Barium is a naturally occurring element in Portland cement. | | |
| (1)Minimum detection limit due to the dilution factor. | | |

### EXAMPLE 2

For years many manufacturers have used on site landfills for the disposal of their hazardous waste. Some of these landfills have been engineered with a clay-like liner while a great many are not. The hazardous materials eventually breach their containment, enter into the groundwater systems and contaminate the drinking water supplies. The contaminants that are present range in a wide spectrum of waste materials, such as an area contaminated with polychlorinated biphenyls and jet fuel/petroleum mediums. The typical contaminants and the regulatory limits (ppm) are shown in Table 2-1.

**TABLE 2-1**

| **Description** | **Concentration (Mg/Kg)** | **Regulatory Limit** |
|---|---|---|
| Benzene | 10288.0* | 0.07 |
| Carbontetrachloride | 2040.0 | 0.07 |
| Chlorobenzene | 350.0 | 1.4 |
| Chloroform | 1160.0 | 0.07 |
| 1,2-Dichloroethane | 1021.0 | 0.40 |
| 1,1-Dichloroethylene | 6560.0 | 0.1 |
| 1,1,2,2-Tetrachloroethane | 3481.0 | 1.3 |
| Toluene | 207.0 | 14.4 |
| 1,1,1-Trichloroethane | 1497.0 | 30.0 |
| Trichloroethylene | 1390.0 | 0.07 |
| O,M,P,-Creosol | 6.7 | 10.0 |
| 1,2-Dichlorobenzene | 43.9 | 4.3 |
| 1,4-Dichlorobenzene | 4.2 | 4.3 |
| 2,4-Dinitrotoluene | 33.4 | 0.13 |
| Hexachlorobenzene | 0.1 | 4.3 |
| Arochlor 1242*** | 14,563.0 | ** |

| | | |
|---|---|---|
| * The samples were spiked with 10,000 ppm benzene. | | |
| ** No levels have been established by U.S. EPA. | | |
| *** Trademark of Monsanto Company. | | |

The physical characteristics of the soils were as shown in Table 2-2. the concentration of oil and grease was prevalent in the visual inspection.

**TABLE 2-2**

| **Parameter** | **Value** |
|---|---|
| Density | 1.32 |
| Moisture | 5.0% |
| pH | 6.7 |
| Oil and Grease | 16.7% |

The materials were mixed in a Hobart mixer at a moderate speed. The different concentrations of admixtures used are provided in Table 2-3. The waste material performed well under these treatment conditions. The treated waste materials produced a free standing monolith within 24 hours and had a compressive strength of greater than 4.826 x 10⁶ N/m² (700 psi). The measured physical parameters are shown in Table 2-4. The analytical results in Table 2-5 show the effectiveness with the different mixtures.

**TABLE 2-3**

| **Additives (Gms)** | **Mixture 1** | **Mixture 2** | **Mixture 3** |
|---|---|---|---|
| Waste Soils | 2000.0 | 2000.0 | 2000.0 |
| 1:1 Mixture--Octanol/Decanol | 20.0 | 70.0 | 67.0 |
| Polyoxyethylene glycol ether | 20.0 | -- | 34.0 |
| Polyethylene Glycol | -- | 70.0 | 34.0 |
| Water | 947.0 | 745.0 | 424.0 |
| Class "F" Flyash | 1048.0 | 400.0 | 650.0 |
| Type I Portland Cement | 598.0 | 704.0 | 650.0 |
| Blast Furnace Slag | -- | 400.0 | -- |

**TABLE 2-4**

| **Parameter** | **Mixture 1** | **Mixture 2** | **Mixture 3** |
|---|---|---|---|
| Unconfined Compressive Strength | 1250.0 | 1000.0 | 2125.0 |
| Permeability (Darcys) | 1.11E-9 | 9.43E-9 | 1.67E-8 |
| Free Liquids | 0.0% | 0.0% | 0.0% |
| Density | 1.81 | 1.79 | 1.90 |
| Bulking | 23.0% | 19.0% | 28.0% |

**TABLE 2-5**

| **Description** | **TCLP Results** | | |
|---|---|---|---|
| | **Mixture 1** | **Mixture 2** | **Mixture 3** |
| Benzene | 1.7* | 6.3* | 3.9* |
| Carbontetrachloride | <0.05 | <0.05 | <0.05 |
| Chlorobenzene | <0.05 | <0.05 | <0.05 |
| Chloroform | <0.05 | <0.05 | <0.05 |
| 1,2-Dichloroethane | <0.05 | <0.05 | <0.05 |
| 1,1-Dichloroethylene | <0.05 | <0.05 | <0.05 |
| 1,1,2,2-Tetrachloroethane | <0.05 | <0.05 | <0.05 |
| Toluene | <0.05 | <0.08 | <0.05 |
| 1,1,1-Trichloroethane | <0.05 | <0.05 | <0.05 |
| Trichloroethylene | <0.05 | <0.05 | <0.05 |
| O,M,P,-Creosol | <0.01 | <0.01 | <0.01 |
| 1,2-Dichlorobenzene | <0.01 | <0.01 | <0.01 |
| 1,4-Dichlorobenzene | <0.01 | <0.01 | <0.01 |
| 2,4-Dinitrotoluene | <0.01 | <0.01 | <0.01 |
| Hexachlorobenzene | <0.01 | <0.01 | <0.01 |
| Hexachloroethane | <0.01 | <0.01 | <0.01 |
| Arochlor 1242 | <0.30 | <0.30 | <0.30 |

| | | | |
|---|---|---|---|
| * Additives would have to be increased to adequately handle the large concentration of benzene. | | | |

### EXAMPLE 3

The refinery industry uses materials (such as bentonite clays) for filtration of petroleum products. These clays have the capability of capturing undesirable constituents commonly found in raw petroleum medias. The "spent clays" are generally pumped to a holding lagoon and left in their spent state. For older refineries the lagoons have existed for decades. The clays are exposed to the environs and, after seasonal rains, begin to release many of the constituents to the groundwater supplies. Typical contaminants are shown in Table 3-1.

**TABLE 3-1**

| **Description** | **Concentration (Mg/l)** | **Regulatory Limit (ppm)** |
|---|---|---|
| Arsenic | 12.5 | 5.0 |
| Barium | 1400.0 | 100.0 |
| Chromium | 950.0 | 5.0 |
| Copper | 550.0 | ** |
| Lead | 4250.0 | 5.0 |
| Manganese | 270.0 | ** |
| Mercury | 4.0 | 0.2 |
| Selenium | 0.76 | 1.0 |
| Silver | 110.0 | 5.0 |
| Vanadium | 130.0 | ** |
| Zinc | 1520.0 | ** |
| Benzene | 35.0 | 0.07 |
| Toluene | 280.0 | 14.4 |
| Xylene | 730.0 | 10.0 |
| Xylene | 730.0 | 10.0 |
| Ethylbenzene | 150.0 | 4.0 |
| Chrysene | 14.0 | 0.02 |
| Naphthalene | 710.0 | 14.4 |
| Pyrene | 27.0 | 4.0 |
| Anthracene | 13.0 | 0.2 |
| Benzo (A) anthracene | 8.8 | 0.011 |
| Phenanthrene | 140.0 | 0.20 |
| Phenol | 6.4 | 14.4 |
| 2-Methylnaphthalene | 765.0 | ** |
| Total Oil & Grease | 516,118.0 | ** |

| | | |
|---|---|---|
| ** No limits have been established by the U.S. EPA. | | |

The physical parameters as measured are provided in Table 3-2.

**Table 3-2**

| **Parameter** | **Lagoon #1** |
|---|---|
| Density | 1.31 |
| Moisture | 10.6% |
| pH | 4.1 |
| Oil and Grease | 52.0% |

The materials were mixed in a Hobart mixer at high speed with a high shear attachment. The concentrations of additives are provided in Table 3-3. The end waste material was a smooth homogeneous mixture. The material was hard after 24 hours of curing and could be extracted from the molds. The measured physical parameters are listed in Table 3-4 and the analytical results from the TCLP analysis are listed in Table 3-5.

**Table 3-3**

| **Additives (Gms)** | **Lagoon #1** |
|---|---|
| Waste Sludge | 2000.0 |
| 1:1 Mixture Octanol-Decanol | 37.5 |
| Polyoxyethylene glycol ether | 37.5 |
| Water | 350.0 |
| Class "F" Flyash | 400.0 |
| Class "C" Flyash | 150.0 |
| Type II Portland Cement | 267.0 |
| Lime | 40.0 |

**Table 3-4**

| **Parameters** | **Lagoon #1** |
|---|---|
| Unconfined Compressive Strength | 8.101 x 10⁶ N/m² (1175.0 psi) |
| Permeability | 8.6E-7 Darcys |
| Free Liquids | 0.0% |
| Bulking | 26.0% |

**Table 3-5**

| **Description** | **TCLP Results** | |
|---|---|---|
| | **Concentration (Mg/l)** | **Post Treatment (Mg/l)** |
| Arsenic | 12.5 | <0.0025 |
| Barium | 1400.0 | 0.7 |
| Chromium | 950.0 | <0.04 |
| Copper | 550.0 | <0.04 |
| Lead | 4250.0 | <0.02 |
| Manganese | 270.0 | <0.02 |
| Mercury | 4.0 | <0.001 |
| Selenium | 0.76 | 0.016 |
| Silver | 110.0 | <0.01 |
| Vanadium | 130.0 | <0.001 |
| Zinc | 1520.0 | <0.01 |
| Benzene | 35.0 | <0.01 |
| Toluene | 280.0 | 0.015 |
| Xylene | 730.0 | 0.033 |
| Ethylbenzene | 150.0 | <0.01 |
| Chrysene | 14.0 | <0.01 |
| Naphthalene | 710.0 | 0.012 |
| Pyrene | 27.0 | <0.01 |
| Anthracene | 13.0 | <0.01 |
| Benzo (A) anthracene | 8.8 | <0.01 |
| Phenanthrene | 140.0 | <0.01 |
| Phenol | 6.4 | <0.01 |
| 2-Methylnaphthalene | 765.0 | <0.01 |
| Total Oil & Grease | 516,118.0 | <0.01 |

### EXAMPLE 4

The steel industry has generated a waste material for decades commonly referred to as emission control dust/sludge. This material is a waste by-product from the primary production of steel and is generally found where electric arc furnaces are used. The dust is passed through a scrubber system and ends up being a sludge primarily comprised of metallic waste. Table 4-1 shows the typical constituents and their concentrations.

**TABLE 4-1**

| **Description** | **Concentration (Mg/l) Waste Sludge** | **Regulatory Limit** |
|---|---|---|
| Arsenic | 44.5 | 5.0 |
| Barium | 60.0 | 100.0 |
| Cadmium | 280.0 | 1.0 |
| Chromium | 1170.0 | 5.0 |
| Chromium (Hex) | 3.4 | 0.50 |
| Iron | 177,000.0 | ** |
| Lead | 7400.0 | 5.0 |
| Manganese | 30,400.0 | 100.0 |
| Mercury | 35.80 | 0.2 |
| Silver | 33.20 | 1.0 |
| Nickel | 300.0 | 0.30 |
| Selenium | 2158.0 | 1.0 |
| Zinc | 50,000.0 | ** |

| | | |
|---|---|---|
| ** No levels have been established by U.S. EPA. | | |

The physical parameters as measured are provided in Table 4-2.

**TABLE 4-2**

| **Parameter** | **Waste Sludge** |
|---|---|
| Density | 2.26 |
| Moisture | 18.7% |
| pH | 11.5 |
| Oil & Grease | <1.0% |

The materials were mixed in a Hobart mixer at high speed with a high shear attachment. The concentrations of addivites are provided in Table 4-3. The end waste material was a smooth homogeneous mixture. The material was hard after 24 hours of curing and could be extracted from the molds. The measured physical parameters are listed in Table 4-4 and the analytical results from the TCLP analysis are listed in Table 4-5.

**TABLE 4-3**

| **Additives (Gms)** | **Waste Sludge** |
|---|---|
| Waste Sludge | 2000.0 |
| Hexadecanol | 8.5 |
| Polyoxyethylene glycol ether | 8.5 |
| Water | 527.0 |
| Class "F" Flyash | 586.0 |
| Type II Portland Cement | 390.0 |

**TABLE 4-4**

| **Parameter** | **Waste Sludge** |
|---|---|
| Unconfined Compressive Strength | 14.8 x 10⁶N/M² (2147.0 psi) |
| Permeability | 2.62E-8 Darcys |
| Free Liquids | 0.0% |

**TABLE 4-5**

| **Description** | **TCLP Results** | |
|---|---|---|
| | **Concentration (Mg/l)** | **Post Treatment (Mg/l)** |
| Arsenic | 44.5 | <0.01 |
| Barium | 60.0 | <0.01 |
| Cadmium | 280.0 | <0.01 |
| Chromium (Total) | 1,170.0 | 0.2 |
| Chromium (Hex) | 3.4 | <0.01 |
| Iron | 17.7% | <0.01 |
| Lead | 7400.0 | <0.08 |
| Manganese | 30,400.00 | <0.01 |
| Mercury | 35.80 | <0.01 |
| Nickel | 300.00 | 0.83 |
| Selenium | 2.58 | <0.01 |
| Silver | 33.20 | <0.01 |
| Zinc | 50,000.0 | <0.01 |

### EXAMPLE 5

For years many countries have manufactured chemicals for the control of weeds and pestilence. These chemicals are commonly referred to as herbicides and pesticides. Many of these materials may be carcinogens, and their use and production are under the control of federal regulatory agencies. However, the disposal of excess materials took place prior to this governmental action. The result of this disposal produced landfills with high levels of these chemicals. With recent congressional involvement in our environment, the areas are slated to be remediated to some detoxified state. The landfills are generally polluted with organic and inorganic waste materials. A typical landfill is identified to have the contaminants illustrated in Table 5-1.

**TABLE 5-1**

| **Description** | **Concentration (Mg/Kg)** | **Regulatory Limits (ppm)** |
|---|---|---|
| Aldrin | 98.0 | 0.14 |
| Arsenic | 6290.0 | 5.0 |
| Chlordane | 76.0 | 0.25 |
| 4,4'-DDD | 59.0 | 0.1 |
| 4,4'-DDE | 7.17 | 0.1 |
| 4,4'-DDT | 14.9 | 0.1 |
| Endrin | 0.75 | 0.02 |
| Lead | 4830.0 | 5.0 |
| Lindane | 5.47 | 0.4 |
| Toxaphene | 363.00 | 0.5 |
| Heptachlor | 0.26 | 0.47 |
| Dieldrin | 17.0 | 0.8 |
| Methoxychlor | 0.6 | 1.0 |
| 2,4-D | 60.0 | 10.0 |
| Silvex | 270.0 | 1.0 |
| Note: With the exception of arsenic and lead, the above descriptions refer to trademarks of various companies. | | |

The physical parameters as measured are provided in Table 5-2.

**TABLE 5-2**

| **Parameter** | **Landfill** |
|---|---|
| Density | 0.975 |
| Moisture | 8.6% |
| pH | 8.5 |
| Oil & Grease | <1.0% |

The materials were mixed in a Hobart mixer at high speed with a high shear attachment. The concentrations of additives are provided in Table 5-3. The end waste material was a smooth homogeneous mixture. The material was hard after 24 hours of curing and could be extracted from the molds. The measured physical parameters are listed in Table 5-4 and the analytical results from the TCLP analysis are listed in Table 5-5.

**TABLE 5-3**

| **Additives (Gms)** | **Mixture** | | | |
|---|---|---|---|---|
| | **One** | **Two** | **Three** | **Four** |
| Waste Soil | 1000.0 | 1000.0 | 1000.0 | 1000.0 |
| Hexadecanol | 25.0 | 0.0 | 0.0 | 0.0 |
| Octadecanol | 0.0 | 26.0 | 0.0 | 0.0 |
| Octanol-Decanol (1:1) | 0.0 | 0.0 | 25.0 | 5.0 |
| Polyoxyethlene glycol ether | 25.0 | 26.0 | 25.0 | 5.0 |
| Water | 262.0 | 297.0 | 385.0 | 671.0 |
| Class "F" Flyash | 341.0 | 191.0 | 360.0 | 313.0 |
| Class "C" Flyash | 0.0 | 191.0 | 0.0 | 313.0 |
| CaCO₃ | 0.0 | 0.0 | 0.0 | 64.0 |
| Type II Portland Cement | 60.0 | 20.0 | 40.0 | 0.0 |

**TABLE 5-4**

| **Parameters** | **Mixture** | | | |
|---|---|---|---|---|
| | **One** | **Two** | **Three** | **Four** |
| Bearing Strength N/M² | | | | |
| 24 Hour | 207 (30.0 psi) | 110 (16.0 psi) | 152 (22.0 psi) | 193 (28.0 pai) |
| 72 Hour | 331 (48.0 psi) | 214 (31.0 psi) | 255 (37.0 psi) | 421 (61.0 psi) |
| 14 Day | 1256 (182.0 psi) | 945 (137.0 psi) | 1111 (161.0 psi) | 821 (119.0 psi) |
| pH | 11.8 | 11.5 | 11.6 | 11.8 |
| Free Liquids | 0.0% | 0.0% | 0.0% | 0.0% |

**TABLE 5-5**

| **California Wet Test (Micrograms/L)** | | | | |
|---|---|---|---|---|
| **Description** | **Mixture** | | | |
| | **One** | **Two** | **Three** | **Four** |
| Aldrin | <0.004 | <0.004 | <0.004 | <0.004 |
| Arsenic | 17.2ppm | 16.3ppm | 3.1ppm | 3.6ppm |
| Chlordane | <0.014 | <0.014 | <0.014 | <0.014 |
| 4,4'-DDD | <0.011 | <0.011 | <0.011 | <0.011 |
| 4,4'-DDE | <0.004 | <0.004 | <0.004 | <0.004 |
| 4,4'-DDT | <0.012 | <0.012 | <0.012 | <0.012 |
| Endrin | <0.006 | <0.006 | <0.006 | <0.006 |
| (Endosulfan I) | <0.014 | <0.014 | <0.014 | <0.014 |
| (Endosulfan II) | <0.004 | <0.004 | <0.004 | <0.004 |
| (Endosulfan Sulfate) | <0.066 | <0.066 | <0.066 | <0.066 |
| (Endrin Ketone) | <0.01 | <0.01 | <0.01 | <0.01 |
| Lead | 4.1ppm | 6.2ppm | 6.2ppm | 1.2ppm |
| Lindane | <0.004 | <0.004 | <0.004 | <0.004 |
| (a-BHC) | <0.003 | <0.003 | <0.003 | <0.003 |
| (y-BHC) | <0.004 | <0.004 | <0.004 | <0.004 |
| (B-BHC) | <0.006 | <0.006 | <0.006 | <0.006 |
| (d-BHC) | <0.009 | <0.009 | <0.009 | <0.009 |
| Toxaphene | <0.24 | <0.24 | <0.24 | <0.24 |
| Heptachlor | <0.003 | <0.003 | <0.003 | <0.003 |
| (Heptachlor Epoxide) | <0.083 | <0.083 | <0.083 | <0.083 |
| Dieldrin | <0.002 | <0.002 | <0.002 | <0.002 |
| Methoxychlor | <0.01 | <0.01 | <0.01 | <0.01 |
| 2,4-D | <0.01 | <0.01 | <0.01 | <0.01 |
| Silvex | <0.01 | <0.01 | <0.01 | <0.01 |
| Note: With the exception of arsenic and lead, the above descriptions refer to trademarks of various companies. | | | | |

### EXAMPLES 6-9

In our nation's weapon development and research laboratories, controlled and operated by the U.S. Department of Energy, many types of waste treatment processes are used. However, some of these processes have proven ineffective. The following examples illustrate the effectiveness of this invention with the specific waste materials present. This invention is applicable to these types of waste streams regardless of whether the contaminants are radioactive.

### EXAMPLE 6 - CaCO₃ Sludge

Waste stream 1 represents a calcium carbonate sludge containing toxic metals (e.g., As, Cd, Cr, Pb, Hg, Ni, Ag). Such sludges can be generated as a result of biodenitrification of high nitrate wastewaters. Many nitrate bearing waste streams are acidic, requiring neutralization with hydrated lime before biological denitrification. Acetic acid (which provides a carbon source) and tri-butylphosphate are added to the waste in order to support the biodenitrification process. This anaerobic biodenitrification converts the nitrate waste (and a carbon source) to nitrogen and carbon dioxide. Calcium present reacts with the CO₂ to form calcium carbonate, which is insoluble and forms a solid.

Typical contaminant concentrations are shown in Table 6-1.

### EXAMPLE 7 - CaCO₃-Mg(OH)₂ Sludge

Waste stream 2 represents a CaCO₃-Mg(OH)₂ sludge which contains a variety of metals. This sludge is generated by waste treatment processes, including precipitation by the addition of lime and soda, followed by clarification and additional water softening through the use of caustic and ferrous sulfate.

Typical contaminant results are shown in Table 6-1.

### EXAMPLE 8 - Metal Hydroxide Sludge

This waste stream represents metal hydroxide sludges such as those generated by metal plating operations, including acid and alkaline rinse operations, metal preparation cleanup processes, and mop waters. This general category of wastes covers a broad range of chemical compositions and concentrations which includes significant quantities of heavy metals, acids, bases, and organic materials. Typical contaminants are found in Table 6-1.

### EXAMPLE 9 - Concentrated Nitrate Slurry

This waste stream represents a concentrated nitrate waste slurry. Many waste treatment process include ion-exchange columns which require the recovery and regeneration of the resin using nitric acid. The effluent produced by resin regeneration can be concentrated in an evaporator to produce a saturated sodium nitrate slurry which is represented by this material.

This waste stream can be characterized as waste such as the nearly saturated sodium nitrate evaporator concentrate generated at Department of Energy process waste treatment facilities. Table 6-1 shows the chemical contaminants and their concentrations.

**TABLE 6-1**

| **Description (ppm)** | **Waste Streams** | | | | **Limit** |
|---|---|---|---|---|---|
| | **Example Regulatory 6** | **Example 7** | **Example 8** | **Example 9** | |
| Magnesium | 2600.0 | 20683.0 | 66599.0 | 1721.0 | ** |
| Iron | 497.0 | 10386.0 | 55086.0 | --- | ** |
| Copper | 559.0 | --- | 440.0 | --- | ** |
| Uranium | 567.0 | --- | 8876.0 | --- | ** |
| Aluminum | 15800.0 | 1400.0 | 55000.0 | --- | 100.0 |
| Nickel | 1005.0 | --- | 23267.0 | --- | 0.3 |
| Silica | 180.0 | --- | --- | --- | ** |
| Selenium | 49.0 | 61.0 | 61.0 | 49.0 | 1.0 |
| Arsenic | 26.0 | 27.0 | 27.0 | 53.0 | 5.0 |
| Silver | 51.0 | 51.0 | 64.0 | 51.0 | 5.0 |
| Mercury | 52.0 | 53.0 | 6505.0 | 56.0 | 0.2 |
| Cesium | 47.0 | 79.0 | 47.0 | 47.0 | ** |
| Lead | 52.0 | 200.0 | 50.0 | 50.0 | 5.0 |
| Barium | 51.0 | 101.0 | 202.0 | 53.0 | 100.0 |
| Cadmium | 49.0 | 49.0 | 120.0 | 61.0 | 1.0 |
| Chromium | 28.0 | 52.0 | 24170.0 | 83.0 | 5.0 |
| Strontium | --- | 460.0 | 141.0 | 54.0 | ** |
| Beryllium | --- | --- | 49.0 | --- | 20.0 |
| Boron | --- | --- | 823.0 | --- | ** |
| Zinc | --- | --- | 500.0 | --- | ** |
| Nitrates | --- | --- | --- | 286000.0 | |
| Phenols | 174.0 | 174.0 | 3470.0 | --- | |
| Tributyl-phosphate | 530.0 | --- | --- | --- | |

| | | | | | |
|---|---|---|---|---|---|
| ** No regulatory limit has been established by U.S. EPA. | | | | | |
| Note: The dashes mean that no test was conducted. | | | | | |

The physical characteristics of the waste materials for Examples 6, 7, 8 and 9 are shown in Table 6-2. These sludge materials range 45-55 percent by weight solids.

**TABLE 6-2**

| **Parameter** | **Waste Streams** | | | |
|---|---|---|---|---|
| | **Example 6** | **Example 7** | **Example 8** | **Example 9** |
| Density | 1.35 | 1.15 | 1.1 | 1.13 |
| Moisture | 53.4% | 49.0% | 51.2% | 52.0% |
| pH | 9.8 | 11.4 | 10.0 | 13.0 |

Each of the materials was mixed following the same mixing scheme. Each were mixed in a Hobart mixer at moderate speed. The concentration of each additive is provided in Table 6-3. The final product produced is a highly desirable waste. The material exhibits sound structural integrity.

**TABLE 6-3**

| **Additives (Gms)** | **Waste Streams** | | | |
|---|---|---|---|---|
| | **Example 6** | **Example 7** | **Example 8** | **Example 9** |
| Waste Sludge | 2000.0 | 2000.0 | 2000.0 | 2000.0 |
| 1:1 Mixture Octanol-Decanol | 145.0 | 145.0 | 145.0 | 170.0 |
| Polyoxyethylene glycol ether | 145.0 | 145.0 | 145.0 | 170.0 |
| Water | 280.0 | 256.0 | 769.0 | --- |
| Class F Flyash | 1875.0 | 1600.0 | 1386.0 | 1590.0 |
| Type III Portland Cement | 2812.0 | 2407.0 | 2407.0 | 2385.0 |
| CaCO₃ | --- | --- | 219.0 | --- |

The testing protocols for treating waste materials in a nuclear environment are very complex. It is desired to have a treatment which can decrease the toxicity to an end point as to have the materials delisted, and this invention reaches and surpasses such an end point.
Table 6-4 illustrates the results which can be obtained following the EP Toxicity Test procedure.

**TABLE 6-4**

| **EP Toxicity Test (Mg/l)** | | | | |
|---|---|---|---|---|
| **Description** | **Waste Streams** | | | |
| | **Example 6** | **Example 7** | **Example 8** | **Example 9** |
| Magnesium | <0.01 | <0.01 | <0.01 | <0.01 |
| Iron | <0.01 | <0.01 | <0.01 | --- |
| Copper | <0.01 | --- | <0.01 | --- |
| Uranium | <0.01 | --- | <0.01 | --- |
| Aluminum | <0.01 | <0.01 | <0.01 | --- |
| Nickel | <0.01 | --- | <0.01 | --- |
| Silica | <0.01 | --- | --- | --- |
| Selenium | <0.01 | <0.01 | <0.01 | <0.01 |
| Arsenic | <0.01 | <0.01 | <0.01 | <0.005 |
| Silver | <0.01 | <0.01 | <0.01 | <0.005 |
| Mercury | <0.01 | <0.0004 | <0.0004 | <0.001 |
| Cesium | <0.01 | <0.01 | <0.01 | <0.01 |
| Lead | <0.01 | <0.01 | <0.01 | <0.005 |
| Barium | 0.9 | 0.2 | 0.2 | 0.25 |
| Cadmium | <0.001 | <0.001 | <0.001 | 0.016 |
| Chromium | <0.01 | <0.01 | <0.01 | <0.019 |
| Strontium | --- | <0.01 | <0.01 | <0.01 |
| Beryllium | --- | --- | <0.01 | --- |
| Boron | --- | --- | <0.01 | --- |
| Zinc | --- | --- | <0.01 | --- |
| Nitrates | --- | --- | --- | 2300.0 |
| Phenols | <0.004 | <0.004 | <0.004 | --- |
| Tributyl phosphate | <0.004 | --- | --- | --- |

The structural integrity of a wasteform is measured following several pretesting procedures. Table 6-5 lists the results obtained following these protocols. Unconfined Compressure Strength is given in N/M² x 10⁶ (psi).

**TABLE 6-5**

| **Parameter** | **Waste Streams** | | | |
|---|---|---|---|---|
| | **Example 6** | **Example 7** | **Example 8** | **Example 9** |
| Unconfined Compressive Strength (UCS) | 17.8 (2583.0) | 30.5 (4417.0) | 16.1 (2333.0) | 21.6 (3133.0) |
| UCS Following 10⁸ Rads Irradiation | 18.0 (2604.0) | 29.6 (4292.0) | 23.3 (3375.0) | 9.49 (1375.0) |
| UCS Following 90 D | 27.7 (4019.0) | 19.5 (2832.0) | 31.1 (4512.0) | 18.4 (2660.0) |

| Immersion in Water | | | | |
|---|---|---|---|---|
| UCS Following Bio-degradation | 34.5 (5000.0) | 36.7 (5313.0) | 33.6 (4875.0) | 29.0 (4208.0) |
| Amount of G21/G22 Growth | 0.0 | 0.0 | 0.0 | 0.0 |
| UCS Following Freeze/Thaw Cycles | 33.1 (4656.0) | 36.7 (5319.0) | 29.0 (4202.0) | 16.6 (2412.0) |
| Average Weight Loss % | 0.181 | 0.127 | 0.215 | 0.161 |

The final resting place of a waste material is highly dependent on the potential corrositivity of the waste material end form. The U.S. EPA limit of corrosion is 6.35 mm/year. Table 6-6 shows the results obtained.

**TABLE 6-6**

| **Example** | **Average Corrosion Rate (mm/year)** |
|---|---|
| #6 | 0.10 + 0.07 |
| #7 | 0.07 + 0.04 |
| #8 | 0.09 + 0.064 |
| #9 | 0.08 + 0.023 |

The amount of the original contaminants able to leach from the wasteform is confined to a regulatory limit. In the nuclear industry, the leach index (the negative log of 10 of the diffusion coefficient) cannot be less than 6.0. Table 6-7 illustrates the overall effectiveness of this invention.

**TABLE 6-7**

| **Description** | **Waste Streams** | | | |
|---|---|---|---|---|
| | **Example 6** | **Example 7** | **Example 8** | **Example 9** |
| Silver | >9.9 | >10.0 | >10.2 | >9.8 |
| Arsenic | >10.7 | >10.8 | >10.4 | >10.7 |
| Barium | 7.6 | 9.2 | 9.2 | 7.8 |
| Cadmium | >10.0 | >10.0 | >10.7 | >10.3 |
| Chromium | >8.9 | >9.4 | >12.7 | >9.2 |
| Cesium | >9.0 | >9.6 | >9.0 | >8.8 |
| Mercury | >12.9 | >12.9 | >12.7 | >10.5 |
| Nickel | >11.4 | --- | >14.0 | --- |
| Lead | >9.8 | >12.7 | >9.7 | >10.5 |
| Selenium | >10.5 | >10.8 | >10.6 | >10.2 |
| Total Organic Carbon | 11.8 | --- | --- | --- |
| Uranium | >13.0 | --- | >15.3 | --- |
| Strontium | --- | 9.1 | 7.3 | 7.0 |
| Beryllium | --- | --- | >12.8 | --- |
| Copper | --- | --- | >11.3 | --- |
| Zinc | --- | --- | 11.7 | --- |
| Nitrate | --- | --- | --- | 10.0 |
| Note: The dashes mean that no test was conducted. | | | | |

other aspects of the invention include a process for treating hazardous waste material, comprising the steps of:
(a) mixing the waste material;
(b) forming a first composition by mixing an alcohol component containing at least one monohydric alkyl alcohol having from 8-18 carbon atoms; a surfactant component containing at least one surfactant having from 1-100 polyoxyethylene units; and water;
(c) forming a second composition by mixing the waste material and the first composition;
(d) forming a third composition by mixing a binder component and the second composition; and
(e) allowing the third composition to harden into a substantially rigid form.

The waste material may comprise aromatic hydrocarbons, aliphatic hydrocarbons or chlorinated hydrocarbons. The waste material may comprise liquids, sludges, soils or mixtures thereof. The monohydric alkyl alcohol may have from 8-18 carbon atoms and may be n-octanol, n-nonanol, n-decanol, n-hexadecanol, a mixture of n-octanol and n-nonanol, or a mixture of n-octanol and n-decanol.

The process may include a surfactant component containing at least one surfactant having 1-100 polyoxyethylene units and the surfactant may be polyoxyethylene glycol ether.

The process may include a surfactant selected from the group consisting of nonylphenol polyethylene glycol ether, alklyoxy polyethyleneoxy ethanol, alkyloxy (polyethyleneoxy propyleneoxy) isopropanol, nonylphenoxy poly (ethyleneoxy) ethanol, octylphenoxy polyethoxy ethanol and nonylphenoxy polyethoxy ethanol.

The binder component may be flyash, Portland cement, silica fume, blast furnace slag or a mixture of flyash and Portland cement.

As can be seen from the above examples, this invention provides a useful and effective process for treating hazardous waste material to obtain a stable non-hazardous waste material in a substantially rigid form which can be used or disposed of in approved methods.

## Claims

1. A process for treating hazardous waste material, comprising the steps of:
(a) mixing the waste material;
(b) forming a first composition by mixing an alcohol component containing at least one monohydric alkyl alcohol having from 8-32 carbon atoms and a surfactant component;
(c) forming a second composition by mixing the waste material and the first composition;
(d) forming a third composition by mixing a cementitious binder component and the second composition; and
(e) allowing the third composition to harden into a substantially rigid form.

2. A process as defined by Claim 1 wherein the waste material is comprised of aromatic hydrocarbons, aliphatic hydrocarbons or chlorinated hydrocarbons.

3. A process as defined by Claim 1 wherein the waste material is comprised of liquids, sludges, soils or mixtures thereof.

4. A process as defined by Claim 1 wherein the monohydric alkyl alcohol has from 8-18 carbon atoms.

5. A process as defined by Claim 1 wherein the monohydric alkyl alcohol is n-octanol.

6. A process as defined by Claim 1 wherein the monohydric alkyl alcohol is n-nonanol.

7. A process as defined by Claim 1 wherein the monohydric alkyl alcohol is n-decanol.

8. A process as defined by Claim 1 wherein the monohydric alkyl alcohol is n-hexadecanol.

9. A process as defined by Claim 1 wherein the alcohol component is a mixture of n-octanol and n-nonanol.

10. A process as defined by Claim 1 wherein the alcohol component is a mixture of n-octanol and n-decanol.

11. A process as defined by Claim 1 wherein the surfactant component contains at least one surfactant having from 1-100 polyoxyethylene units.

12. A process as defined by Claim 1 wherein the surfactant is a polyoxyethylene glycol ether.

13. A process as defined by Claim 1 wherein the surfactant is selected from the group consisting of nonylphenol polyethylene glycol ether, alkyloxy polyethyleneoxy ethanol, alkyloxy (polyethyleneoxy propyleneoxy) isopropanol, nonylphenoxy poly (ethyleneoxy) ethanol, octylphenoxy polyethoxy ethanol and nonylphenoxy polyethoxy ethanol.

14. A process as defined by Claim 1 wherein the binder component is fly ash.

15. A process as defined by Claim 1 wherein the binder component is Portland cement.

16. A process as defined by Claim 1 wherein the binder component is silica fume or blast furnace slag.

17. A process as defined by Claim 1 wherein the binder component is a mixture of fly ash and Portland cement.

18. A process as defined by Claim 1 wherein the first composition also contains water.

## Patentansprüche

1. Ein Verfahren zur Behandlung gefährlicher Abfallmaterialien, umfassend die folgenden Stufen:
(a) Mischen von Abfallmaterial;
(b) Bildung einer ersten Zusammensetzung durch Mischen einer Alkoholkomponente enthaltend wenigstens einen 1-wertigen Alkyl-Alkohol mit 8 bis 32 Kohlenstoffatomen und eine oberflächenaktive Komponente (Benetzungsmittel);
(c) Bildung einer zweiten Zusammensetzung durch Mischung des Abfallmaterials mit der ersten Zusammensetzung;
(d) Bildung einer dritten Zusammensetzung durch Mischung einer zementhaltigen Binder-Komponente mit der zweiten Zusammensetung; und
(e) Aushärten lassen der dritten Zusammensetzung in eine im wesentlichen starre Form.

2. Ein Verfahren nach Anspruch 1, wobei das Abfallmaterial gebildet ist von bzw. enthält aromatische Kohlenwasserstoffe, aliphatische Kohlenwasserstoffe oder chlorierte Kohlenwasserstoffe.

3. Ein Verfahren nach Anspruch 1, wobei das Abfallmaterial vorliegt als Flüssigkeiten, Schlämme, Böden oder Mischungen hiervon.

4. Ein Verfahren nach Anspruch 1, wobei der 1-wertige Alkyl-alkohol 8 bis 18 Kohlenstoffatome hat.

5. Ein Verfahren nach Anspruch 1, wobei der 1-wertige Alkyl-alkohol n-Octanol ist.

6. Ein Verfahren nach Anspruch 1, wobei der 1-wertige Alkyl-alkohol n-Nonanol ist.

7. Ein Verfahren nach Anspruch 1, wobei der 1-wertige Alkyl-alkohol n-Decanol ist.

8. Ein Verfahren nach Anspruch 1, wobei der 1-wertige Alkyl-alkohol n-Hexadecanol ist.

9. Ein Verfahren nach Anspruch 1, wobei der Alkoholbestandteil eine Mischung von n-Octanol und n-Nonanol ist.

10. Ein Verfahren nach Anspruch 1, wobei die Alkoholkomponente eine Mischung von n-Octanol und n-Decanol ist.

11. Ein Verfahren nach Anspruch 1, wobei die oberflächenaktive Komponente besteht aus wenigstens einem oberflächenaktiven Mittel mit 1 bis 100 Polyoxyethylen-Einheiten.

12. Ein Verfahren nach Anspruch 1, wobei das oberflächenaktive Mittel ein Polyoxyethylen-Glycol-Äther ist.

13. Ein Verfahren nach Anspruch 1, wobei das oberflächenaktive Mittel ausgewählt ist aus der Gruppe, bestehend aus Vinylphenol-polyethylenglycol-Ether, Alkyloxy-polyethylenoxyethanol, Alkyloxy(polyethylen-oxy-propylenoxy-)isopropanol, Nonylphenoxy-poly(ethylenoxy)Äthanol, Octylphenoxy-polyethoxy-ethanol und Nonylphenoxy-polyethoxyäthanol.

14. Ein Verfahren nach Anspruch 1, wobei das Bindemittel Flugasche ist.

15. Ein Verfahren nach Anspruch 1, wobei die Bindemittelkomponente Portland Zement ist.

16. Ein Verfahren nach Anspruch 1, wobei die Bindemittelkomponente Silica-Schlacke oder Hochofenschlacke ist.

17. Ein Verfahren nach Anspruch 1, wobei die Bindemittelkomponente eine Mischung aus Flugasche und Portland Zement ist.

18. Ein Verfahren nach Anspruch 1, wobei die erste Zusammensetzung auch Wasser enthält.

## Revendications

1. Procédé de traitement de déchets dangereux, comprenant les opérations qui consistent :
a) à mélanger les déchets ;
b) à former une première composition en mélangeant un composant alcoolique contenant au moins un alcool alkyle monohydrique ayant de 8 à 32 atomes de carbone et un composant tensio-actif ;
c) à former une seconde composition par mélange des déchets et de la première composition ;
d) à former une troisième composition en mélangeant un composant de liage de cémentite à la seconde composition ; et
e) à laisser durcir la troisième composition sous une forme sensiblement rigide.

2. Procédé selon la revendication 1, dans lequel les déchets comprennent des hydrocarbures aromatiques, des hydrocarbures aliphatiques ou des hydrocarbures chlorés.

3. Procédé selon la revendication 1, dans lequel les déchets comprennent des liquides, de la vase, de la terre, ou des mélanges de ces matières.

4. Procédé selon la revendication 1 dans lequel l'alcool alkyle monohydrique a de 8 à 18 atomes de carbone.

5. Procédé selon la revendication 1 dans lequel l'alcool alkyle monohydrique est du n-octanol.

6. Procédé selon la revendication 1 dans lequel l'alcool alkyle monohydrique est du n-nonanol.

7. Procédé selon la revendication 1 dans lequel l'alcool alkyle monohydrique est du n-décanol.

8. Procédé selon la revendication 1 dans lequel l'alcool alkyle monohydrique est du n-hexadecanol.

9. Procédé selon la revendication 1 dans lequel le composant alcoolique est un mélange de n-octanol et de n-nonanol.

10. Procédé selon la revendication 1, dans lequel le composant alcoolique est un mélange de n-octanol et de n-decanol.

11. Procédé selon la revendication 1 dans lequel le composant tensio-actif contient au moins un tensio-actif ayant de 1 à 100 unités de polyoxyéthylène.

12. Procédé selon la revendication 1, dans lequel le tensio-actif est un éther de polyoxyéthylène glycol.

13. Procédé selon la revendication 1, dans lequel le tensio-actif est choisi dans le groupe qui comprend l'éther de nonylphénol polyéthylène glycol, l'alkyloxy polyéthylèneoxy éthanol, l'alkyloxy (polyéthylèneoxy propyléneoxy) isopropanol, le nonylphénoxy poly (éthylèneoxy) éthanol, l'octylphénoxy polyéthoxy éthanol et le nonylphénoxy polyéthoxy éthanol.

14. Procédé selon la revendication 2, dans lequel le composant de liage est constitué par des escarbilles.

15. Procédé selon la revendication 1, dans lequel le composant de liage est du ciment Portland.

16. Procédé selon la revendication 1, dans lequel le composant de liage est constitué par des vapeurs de silice ou des scories de haut fourneau.

17. Procédé selon la revendication 1, dans lequel le composant de liage est un mélange d'escarbilles et de ciment Portland.

18. Procédé selon la revendication 1, dans lequel la première composition contient aussi de l'eau.
